# EUROPÄISCHE PATENTANMELDUNG

(11) **EP 0 783 101 A2**
(43) Veröffentlichungstag der Anmeldung: **09.07.1997**
(21) Anmeldenummer: 96810881.1
(22) Anmeldetag: 19.12.1996
(51) Int. Cl.: G01N 15/02

(54) **Verfahren und Einrichtung zur optischen Konzentrationsmessung von Feinstaub in einem Medium**

(30) Priorität: 04.01.1996 CH 17/96
(71) Anmelder: Dr. Sigrist AG, 6373 Ennetbürgen (CH)
(72) Erfinder: Huber, Erich, 6004 Luzern (CH)
(74) Vertreter: Groner, Manfred

(57) **Zusammenfassung**

Zur optischen Konzentrationsmessung von Feinstaub (9) in einem Medium (8), mit einer Lichtquelle (1) sind folgende Verfahrensschritte vorgesehen:
a) dem Staub (9) wird definiert polarisiertes Licht (4) zugeführt,
b) im ausgekoppelten Streulicht (18) werden bei unterschiedlichen Polarisationswinkeln (θ) mehrere, insbesondere vier Streulichtintensitäten (I) gemessen, und
c) mit Hilfe dieser Streulichtintensitäten (I) wird die Breite der Korngrössenverteilung und/oder die mittlere Korngrösse berechnet, und
d) aufgrund der berechneten Breite der Korngrössenverteilung und/oder mittleren Korngrösse wird die Konzentrationsmessung korrigiert oder eine Aenderung angezeigt, insbesondere ein Kalibrierwert korrigiert oder eine Aenderung eines Kalibrierwertes angezeigt.

## Beschreibung

Die Erfindung betrifft ein Verfahren zur optischen Konzentrationsmessung von Feinstaub in einem Medium, mit einer Lichtquelle und Mitteln zum Messen von Streulicht. Die Erfindung betrifft ebenfalls eine Einrichtung zur optischen Konzentrationsmessung von Feinstaub gemäss den Oberbegriffen der Ansprüche 13 und 14.

Ein Verfahren und eine Einrichtung zur optischen Messung von in einem Gas suspendierten Teilchen sind aus der CH-A-536 490 des Anmelders bekanntgeworden. Verfahren und Einrichtungen dieser Art sind insbesondere zur Konzentrationsmessung von Feinstäuben seit vielen Jahren in Betrieb und haben sich an sich bewährt. Bei solchen Messungen wird die Erkenntnis benutzt, dass bei Feinstäuben die Intensität des gestreuten Lichts proportional zur Staubkonzentration ist. Allerdings ist die Streulichtintensität nicht nur von der Konzentration der Teilchen, sondern insbesondere von der Grösse der Teilchen abhängig. Ist nun ein solches Messgerät auf eine bestimmte Teilchengrösse kalibriert und ändert sich bei einem zu überwachenden Prozess die Teilchengrösse, so ändert sich auch die Kalibration und damit die Geräteempfindlichkeit, was zur Anzeige eines falschen Konzentrationswertes führt. Bei vielen Messungen besteht nun die Gefahr, dass solche Grössenänderungen der Teilchen nicht rechtzeitig bemerkt und das Gerät nicht neu kalibriert wird.

Der Erfindung liegt die Aufgabe zugrunde, ein Verfahren sowie eine Einrichtung der genannten Gattung bereitzustellen, welche die genannte Schwierigkeit vermeiden.

Die Aufgabe ist bei einem erfindungsgemässen Verfahren durch die im Kennzeichen des Anspruchs 1 genannten Verfahrensschritte gelöst.

Das erfindungsgemässe Verfahren beruht auf dem Prinzip, dass der Polisationszustand des Lichtes, das auf Feinstaub trifft, durch den Streuprozess verändert wird und diese Veränderung eng mit der Korngrösse des Feinstaubes verknüpft ist. Aendert sich somit die Korngrösse eines zu messenden Feinstaubes im Verlaufe der Zeit infolge sich ändernder Prozessbedingungen, so kann dies dem Betreiber sofort signalisiert werden und er kann die Gerätekalibration durch eine gravimetrische Messung neu erstellen. Eine direkte Korrektur der Staubkonzentration ist ebenfalls möglich. Ist bei der Inbetriebnahme der erfindungsgemässen Einrichtung die Korngrössenverteilung des Feinstaubes bekannt, so kann diese in die spätere Auswertung als Startwert miteinbezogen werden, was die Zuverlässigkeit des Verfahrens erhöht. Die Kenntnis die Korngrössenverteilung ist jedoch nicht Bedingung des erfindungsgemässen Verfahrens.

Das erfindungsgemässe Verfahren eignet sich insbesondere für Feinstäube, bei denen der Brechungsindex und die Form der Teilchen bekannt und zeitlich konstant sind. Das Verfahren ist besonders einfach realisierbar für kompakte, kugelförmige oder annähernd kugelförmige Teilchen, jedoch ist ein Verfahren auch für andere Teilchenformen, beispielsweise Stäbchen, Quader oder Flocken möglich.

Das erfindungsgemässe Verfahren ist mit den Einrichtungen gemäss den Ansprüchen 13 und 14 in insbesondere in kontinuierlich arbeitender Weise durchführbar. Bei der bevorzugten Ausführung wird dem Feinstaub mit einem im Primärlichtstrahl angeordneten Polarisator polarisiertes Licht zugeführt. Die Mittel zum Messen des Streulichtes können einen an sich bekannten Photomultiplier oder einen anderen geeigneten Detektor aufweisen. Im Streulicht ist ein zweiter Polarisator angeordnet, der drehbar ist und vorzugsweise in unterschiedlichen Winkeln arretierbar ist.

Denkbar ist aber auch ein rotierender Polarisator. In den vorbestimmten Drehstellungen werden unterschiedliche Streulichtintensitäten gemessen, die proportional zur Staubkonzentration sind und die Informationen über die Korngrösse des Feinstaubes enthalten. Zur Auswertung dieser Informationen eignet sich insbesondere ein Konturlinienverfahren. Denkbar sind auch andere Verfahen, beispielsweise ein Äquivalent-Durchmesser-Verfahren.

Ausführungsbeispiele der Erfindung werden nachfolgend anhand der Zeichnungen näher erlätert. Es zeigen:
- Figur 1: schematisch eine erfindungsgemässe Einrichtung,
- Figur 2: schematisch das Messprinzip, und
- Figur 3: ein Konturdiagramm.

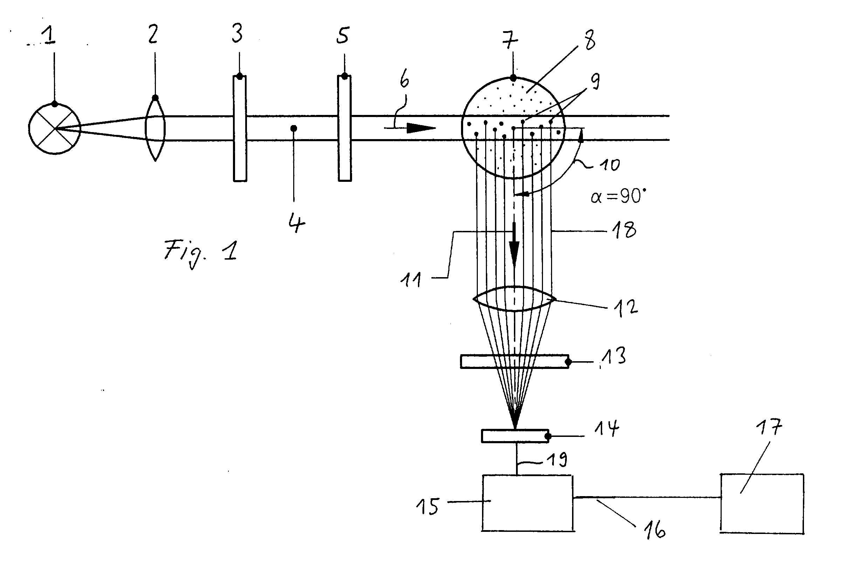

Die Figur 1 zeigt eine Messzelle 7 mit einem Medium 8, in dem Teilchen 9 eines Feinstaubes suspendiert sind. Das Medium ist vorzugsweise ein Gasstrom, denkbar sind jedoch auch andere Medien, beispielsweise eine Flüssigkeit oder ein Feststoff. Die Teilchen 9 können auch Tröpfchen eines Oelnebels sein.

In Richtung des Pfeils 6 ist auf die Messzelle 7 ein Primärlichtstrahl 4 gerichtet, der durch eine Lichtquelle 1, eine Optik 2, einen optischen Filter 3 sowie durch einen ersten Polarisator 5 gebildet wird. Die Lichtquelle 1 ist beispielsweise eine Halogenlampe und gibt ein unpolarisiertes Licht ab. Die an sich bekannte Optik 2 bündelt das Licht, das in Richtung des Pfeils 6 nach dem Durchgang durch den optischen Filter 3 und den ersten Polarisator 5 auf die Messzelle 7 trifft.

An den Teilchen 9 wird das polarisierte Licht gestreut und in Richtung des Pfeils 11 unter einem Messwinkel 10 von vorzugsweise 90° ausgekoppelt. Das Streulicht 18 wird mit einer Optik 12 auf einen Detektor 14 fokussiert. Zwischen der Optik 12 und dem Detektor 14 ist ein zweiter Polarisator 13 angeordnet. Im Detektor 14 kann die Streulichtintensität gemessen und durch eine Leitung 19 entsprechende Signale einem Rechner 15 zugeführt werden. Der Rechner 15 ist über eine weitere Leitung 16 beispielsweise mit einer Anzeige 17 verbunden.

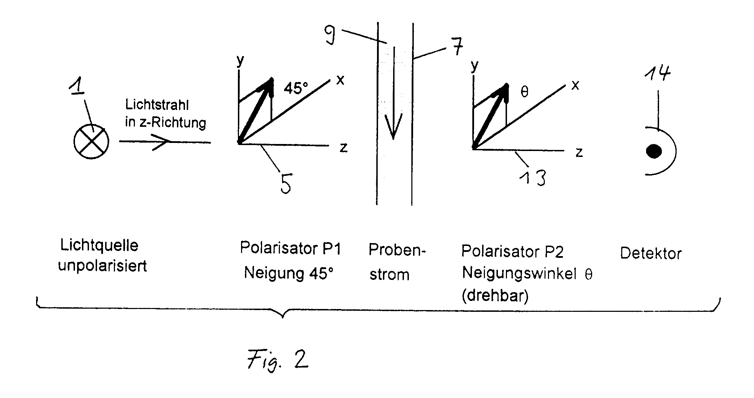

Wie die Figur 2 zeigt, ist der erste Polarisator 5 ist vorzugsweise um 45° gegen die X-Achse geneigt, wobei hier die Z-Achse durch den Lichtstrahl definiert ist. Mit dem ersten Polarisator 5 wird der Messzelle 7 definiert polarisiertes Licht zugeführt, wobei die waagrechte und senkrechte Polarisation gleich sind. Der zweite Polarisator 13 befindet sich direkt vor dem Detektor 14, der beispielsweise ein Photomultiplier ist. Dieser zweite Polarisator 13 ist drehbar und gegen die X-Achse in den Winkeln 90°, 0°, 45° und 135° arretierbar. In diesen Stellungen des zweiten Polarisators 13 sind entsprechend vier Streulichtintensitäten I1, I2, I3 und I4 messbar. Diese Messwerte werden über die Leitung 19 dem Rechner zugeführt. Ein internes Programm des Rechners 15 vergleicht die gemessenen Intensitäten mit streutheoretisch berechneten Daten und ermittelt aus diesem Vergleich Aussagen beispielsweise über die Korngrösse.

Nachfolgend wird das erfindungsgemässe Verfahren näher erläutert.

Aendern sich während einer Messung die Prozessbedingungen nicht und verbleibt entsprechend die Korngrösse konstant, so wird in ansich bekannter Weise die Konzentration der Teilchen 9 im Medium 8 aufgrund der Gerätekalibration ermittelt. Aendert sich jedoch die Korngrösse im Verlaufe der Zeit infolge sich ändernder Prozessbedingungen, so wird eine solche Aenderung im Rechner 15 ermittelt und über die Leitung 16 beispielsweise auf einer Anzeige 17 dem Betreiber signalisiert. Aufgrund der angezeigten Aenderung kann der Betreiber die Gerätekalibration durch eine gravimetrische Messung neu erstellen. Eine direkte Korrektur der Staubkonzentration ist aber ebenfalls möglich. Ist die Korngrössenverteilung bei Inbetriebnahme der Einrichtung bekannt, so kann sie in die spätere Auswertung als Startwert miteinbezogen werden, was die Zuverlässigkeit des Verfahrens erhöht. Die Kenntnis der Korngrössenverteilung ist jedoch nicht Bedingung.

Nachfolgend wird davon ausgegangen, dass die Art der Teilchen 9 und insbesondere deren Brechungsindex und Form während der Messung bekannt ist und für diese Artikelart eine Streutheorie existiert. Für kompakte, kugelförmige oder annähernd kugelförmige Teilchen 9 ist die Streutheorie von G. Mie bekannt. Vorzugsweise ist die Verteilung der Korngrössen annähernd eine logarithmische Normalverteilung, charakterisiert durch eine mittlere Korngrösse d₀ und eine Breite σ. σ ist definiert als der natürliche Logarithmus aus dem Verhältnis dₘₐₓ/d₀, wobei dₘₐₓ die Korngrösse ist, bei der die Verteilung auf ¹/√e = 60.65% abgenommen hat.

Wie bereits erwähnt, sind die vier Intensitäten I proportional zur Staubkonzentration. Zur Auswertung dieser Intensitäten I werden diese zum Polarisationsverhältnis p und zum linearen Polarisationsgrad Pₗᵢₙ, die konzentrationsunabhängige Parameter sind, umgerechnet. Diese beiden Grössen p und Pₗᵢₙ stehen nun gemäss der genannten Streutheorie in direktem Zusammenhang mit der mittleren Korngrösse und der Breite der Verteilung.

Zur Auswertung der beiden genannten Parameter p und Pₗᵢₙ eignet sich je nach Einsatzbedingungen das nachfolgend beschriebene Konturlinienverfahren sowie das Äquivalentdurchmesserverfahren.

Das Konturlinienverfahren eignet sich vor allem dann, wenn die Teilchen 9 bekannt und der Brechungsindex sowie die Form konstant sind. Dies kann beispielsweise bei einem Oelnebel zutreffen. Dieses Verfahren ermöglicht eine Korrektur einer Konzentrationsanzeige bei variabler Korngrösse und zudem eine explizite Bestimmung einer mittleren Korngrösse d₀ und einer Breite σ der Verteilung.

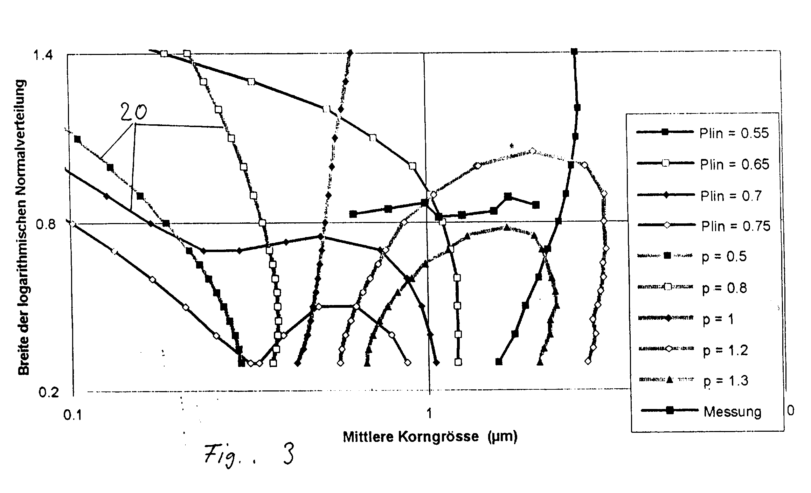

Als Basis für eine Auswertung dienen Konturliniendiagramme der beiden Parameter p und Pₗᵢₙ, wie dies beispielsweise die Figur 3 zeigt. In einem solchen Diagramm sind Linien 20 gleicher Paramerwerte als Höhenlinien in einer Fläche dargestellt, die aus der mittleren Korngrösse d₀ und der Breite der Korngrössenverteilung σ gebildet wird. Jeder Punkt im Konturdiagramm entspricht einer Korngrössenverteilung, charakterisiert durch das Wertepaar d₀/σ. Die Figur 3 zeigt ein kombiniertes Konturdiagramm der beiden Parameter p und Pₗᵢₙ für das Gemisch Parafinöl/Maschinenöl (1=1.48).

Für jede Teilchenart hat dieses Diagramm eine andere Form und wird beispielsweise für kugelförmige Teilchen mit der Mie-Theorie berechnet. Die benötigten Diagramme sind im Rechner 15 gespeichert und stehen der Auswertungssoftware zur Verfügung. Die aus den Intensitäten I in an sich bekannter Weise errechneten Werte von p und Pₗᵢₙ werden von der Auswertungssoftware auf die entsprechenden Konturlinien übertragen. Jeder der beiden Messwerte entspricht einer Konturlinie. Der Schnittpunkt der Konturlinien ergibt die gesuchte Korngrössenverteilung d₀/σ. Zu jeder Station sind in Figur 3 die Messwerte für Oelnebel aus der vollständigen Mischreihe Paraffinöl-Maschinenöl (Tellus 32) eingetragen.

Die Zunahme der Korngrösse widerspiegelt die Zunahme der Viskosität des Gemisches.

Wird nun die Korngrössenverteilung auf diese Weise kontinuierlich gemessen, so lässt sich anhand des Zusammenhangs zwischen den gemessenen Streuintensitäten I und der Korngrösse der zeitliche Verlauf der Geräteempfindlichkeit ermitteln und der Kalibrierwert korrigieren.

Bestehen grössere Abweichungen von den obengenannten Voraussetzungen, so eignet sich zur Auswertung der Intensitäten I das Äquivalentdurchmesserverfahren. Dieses führt zur näherungsweisen Bestimmung der mittleren Korngrösse sowie zu einer näherungsweisen Korrektur der Konzentrationsanzeige.

Beim Äquivalentdurchmesserverfahren wird aus jeder einzelnen Messung von p und Pₗᵢₙ eine äquivalente Korngrösse bestimmt. Die äquivalente Korngrösse dient als Schätzwert für die echte Korngrösse und unterscheidet sich von dieser möglichst wenig. Wesentlich ist, dass sie in der gleichen Form sowohl für p und Pₗᵢₙ als auch für die Streulichtintensität verwendet werden kann. Das heisst, sie ersetzt innerhalb gewisser Grenzen die echte Korngrösse, die nicht bekannt sein muss. Einen besseren Schätzwert für die echte Korngrösse erhält man, wenn zusätzlich die Breite σ der Verteilung bekannt ist. Ist der Äquivalentdurchmesser bestimmt, so kann anhand des Zusammenhangs zwischen Streulichtintensität und Äquivalentdurchmesser der zeitliche Verlauf der Gerätempfindlichkeit ermittelt und auf den Kalibrierwert korrigiert werden. Auch dieses Messverfahren beruht somit auf dem Prinzip, dass der Polarisationszustand des Lichtes, das auf die Teilchen 9 trifft, durch den Streuprozess verändert wird und diese Veränderung mit der Korngrösse verknüpft ist. Änderungen der Korngrösse können somit sofort festgestellt und signalisiert oder für eine direkte Korrektur verwendet werden. Messfehler aufgrund von nicht festgestellten Prozessänderungen können damit vermieden werden.

## Patentansprüche

1. Verfahren zur optischen Konzentrationsmessung von Feinstaub (9) in einem Medium (8), mit einer Lichtquelle (1) und Mitteln (14) zum Messen von Streulicht (18), gekennzeichnet durch folgende Verfahrensschritte:
a) dem Staub (9) wird definiert polarisiertes Licht (4) zugeführt,
b) im ausgekoppelten Streulicht (18) werden bei unterschiedlichen Polarisationswinkeln (θ) mehrere, insbesondere vier Streulichtintensitäten (I) gemessen, und
c) mit Hilfe dieser Streulichtintensitäten (I) wird die Breite der Korngrössenverteilung und/oder die mittlere Korngrösse berechnet, und
d) aufgrund der berechneten Breite der Korngrössenverteilung und/oder mittleren Korngrösse wird die Konzentrationsmessung korrigiert oder eine Aenderung angezeigt, insbesondere ein Kalibrierwert korrigiert oder eine Aenderung eines Kalibrierwertes angezeigt.

2. Verfahren nach Anspruch 1, dadurch gekennzeichnet, dass als Basis für die Auswertung streutheoretisch berechnete und gespeicherte Daten verwendet werden.

3. Verfahren nach Anspruch 1 oder 2, dadurch gekennzeichnet, dass die konzentrationsunabhängigen Parameter: Polarisationsverhältnis (p) und Polarisationsgrad (Pₗᵢₙ) ermittelt werden.

4. Verfahren nach Anspruch 2 oder 3, dadurch gekennzeichnet, dass die gemessenen Werte mit den gespeicherten Daten verglichen werden und dass aus diesem Vergleich Aussagen über die Korngrösse ermittelt werden.

5. Verfahren nach einem der Ansprüche 1 bis 4, dadurch gekennzeichnet, dass bei einer Änderung der Korngrösse diese Änderung angezeigt und die Gerätekalibration neu erstellt wird, beispielsweise mit einer gravimetrischen Messung.

6. Verfahren nach einem der Ansprüche 1 bis 4, dadurch gekennzeichnet, dass bei einer Änderung der Korngrösse der ermittelte Staubkonzentrationswert direkt korrigiert wird.

7. Verfahren nach einem der Ansprüche 1 bis 6, dadurch gekennzeichnet, dass eine bei Inbetriebnahme bekannte Korngrössenverteilung in eine spätere Auswertung als Startwert miteinbezogen wird.

8. Verfahren nach einem der Ansprüche 1 bis 7, dadurch gekennzeichnet, dass aus der Auswertung der gemessenen Intensitäten (I) Konturlinien-Diagramme der beiden Parameter (p und Pₗᵢₙ) verwendet werden, wobei in diesen Diagrammen Linien gleicher Parameterwerte als Höhenlinien (20) in einer Fläche dargestellt werden.

9. Verfahren nach Anspruch 8, dadurch gekennzeichnet, dass die Höhenlinien (20) aus der mittleren Korngrösse (d₀) und der Breite der Korngrössenverteilung (σ) gebildet werden.

10. Verfahren nach einem der Ansprüche 1 bis 9, dadurch gekennzeichnet, dass zwei charakteristische Grössen der Korngrössenverteilung kontinuierlich gemessen werden und anhand des Zusammenhangs zwischen Streuintensität und Korngrösse der zeitliche Verlauf der korngrössenabhängigen Gerätempfindlichkeit ermittelt und der Kalibrierwert korrigiert wird.

11. Verfahren nach einem der Ansprüche 3 bis 10, dadurch gekennzeichnet, dass ein linearer Polarisationsgrad (Pₗᵢₙ) ermittelt wird.

12. Verfahren nach einem der Ansprüche 1 bis 11, dadurch gekennzeichnet, dass die gemessenen Intensitäten (I) zu konzentrationsunabhängigen Parametern (p_{,} Pₗᵢₙ) umgerechnet werden.

13. Einrichtung zur optischen Konzentrationsmessung von Feinstaub in einem Medium (8), insbesondere Gas, mit einer Lichtquelle (1) und einer Optik (2) zum Bilden eines Primärstrahls (4), mit Mitteln (14) zum Messen von am Feinstaub (9) gestreutes Licht (18) und mit Mitteln (15) zum Auswerten der gemessenen Streulichtintensitäten, dadurch gekennzeichnet, dass das Primärlicht (4) polarisiert ist, dass im Streulicht (18) Mittel (13, 14) vorgesehen sind, mit denen die Veränderung des Polarisationszustandes durch den Streuprozess am Feinstaub (9) messbar ist und dass Mittel (17) zur Korrektur der Konzentrationsmessung aufgrund der gemessenen Veränderung des Polarisationszustandes vorgesehen sind.

14. Einrichtung zur optischen Konzentrationsmessung von Teilchen (9) in einem Medium (8), mit einer (14) zur Aufnahme von Streulicht (18) und einem Rechner (15) zur Auswertung einer gemessenen Streulichtintensität, dadurch gekennzeichnet, dass im Primärstrahl (4) ein erster und im Streulicht ein zweiter Polarisator (5, 13) angeordnet sind, dass mit dem ersten Polarisator (5) dem zu messenden Medium definiert polarisiertes Licht zuführbar ist, dass der zweite Polarisator (13) drehbar ist, dass der zweite Polarisator (13) in mehreren Winkeln (θ) arretierbar ist, vorzugsweise in den Winkeln 90°, 0°, 45° und 135° und in diesen Winkelstellungen Streulichtintensitäten (I) messbar sind, und mit Mitteln zur Korrektur eines Kalibrierwertes und/oder Anzeige der Änderung eines Kalibrierwertes.

15. Einrichtung nach Anspruch 14, dadurch gekennzeichnet, dass der erste Polarisator (5) direkt vor einer Messzelle (7) angeordnet und um 45° gegen die X-Achse geneigt ist, wobei der Lichtstrahl (4) die Z-Achse definiert.
